# FASCICULE DE BREVET EUROPEEN

(11) **EP 0 860 953 B1**
(45) Date de publication et mention de la délivrance du brevet: **19.05.2004**
(21) Numéro de dépôt: 98400337.6
(22) Date de dépôt: 13.02.1998
(51) Int. Cl.: H04B 7/26

(54) **Procédé de radiotéléphonie entre une station de base et un téléphone mobile, par l'intermédiaire d'un répéteur**
Verfahren zur Funktelefonübertragung zwischen einer Basisstation und einem mobilen Telefon mittels eines Funkrelais
Method of radiotelephone communication between a base station and a mobile telephone by means of a repeater

(30) Priorité: 21.02.1997 FR 9702099
(43) Date de publication de la demande: 26.08.1998
(73) Titulaire: SAGEM SA, 75116 Paris (FR)
(72) Inventeur: Huriau, Alain, 59910 Bondues (FR); Zibell, Laurent, 75015 Paris (FR)
(74) Mandataire: Bloch, Gérard

(56) Documents cités:
- EP-A- 0 637 145
- GB-A- 2 253 324
- GB-A- 2 272 599
- US-A- 4 578 815
- US-A- 4 718 108

## Description

Un réseau de radiotéléphonie comporte une pluralité de stations de base assurant chacune la couverture radio d'une cellule spécifique dans l'ensemble du réseau. Une cellule comporte cependant souvent des zones d'ombre radio dues au relief, si bien qu'on implante à proximité de chaque zone d'ombre un répéteur radio qui la couvre et est interposé entre la station et les téléphones mobiles situés dans la zone d'ombre.

Pour éviter une interférence entre les canaux radio ou porteuses diffusées par le répéteur dans la zone d'ombre et les canaux de la station, qui, en pratique, ne sont pas entièrement atténués, on pourrait songer à transposer, dans le répéteur, la pluralité de canaux provenant de la station en d'autres canaux.

Cette transposition de canaux résoudrait le problème matériel de la détection sans perturbations des canaux du répéteur, mais elle engendrerait cependant un problème lié au protocole d'établissement des communications. En effet, c'est la station de base qui détermine celui de ses canaux qui va être alloué à tout téléphone mobile établissant une communication et elle effectue l'allocation du canal en transmettant, par un canal de signalisation à fréquence fixe, l'identité de ce canal. Cette identité spécifie un canal Ci parmi la pluralité ci-dessus et le téléphone se cale dessus en réception. Or, ici, le canal alloué Ci de la porteuse de la station est transposé en un autre canal Cj par le répéteur, donc avant d'atteindre le téléphone mobile. Il y a donc discordance entre l'information de calage de l'accord (Ci) reçue par le téléphone et la réalité matérielle Cj des ondes qu'il reçoit. Le problème se pose dans les mêmes termes que ce soit pour les voies descendantes, de la station vers les téléphones, ou pour les voies montantes.

La présente invention vise à s'affranchir des problèmes évoqués ci-dessus pour permettre le fonctionnement correct du réseau dans les zones d'ombre.

A cet effet, l'invention concerne un procédé de radiotéléphonie entre une station de base couvrant une cellule de communication et un téléphone mobile par l'intermédiaire d'un répéteur de diffusion couvrant une zone d'ombre, le téléphone étant calé sur une fréquence de canal déterminée par la station de base, caractérisé par le fait qu'on crée une zone intermédiaire de transmission entre la station de base et le répéteur de diffusion et, de la cellule de base à la zone intermédiaire, on procède à une transposition du canal de transmission du canal du téléphone à un canal intermédiaire et, de la zone intermédiaire à la zone d'ombre, on procède à une transposition de canal inverse.

Ainsi, la zone intermédiaire constitue une zone tampon séparant la station de base du répéteur et autorisant donc l'utilisation des mêmes canaux par ceux-ci, la double transposition étant de ce fait transparente vis-à-vis des téléphones mobiles.

L'invention sera mieux comprise à l'aide de la description suivante d'un mode de mise en oeuvre préféré du procédé de l'invention, en référence au dessin annexé, sur lequel :
- la figure 1 représente schématiquement une cellule radio avec répéteur d'un réseau de téléphonie cellulaire pour la mise en oeuvre du procédé de l'invention ;
- la figure 2 illustre les transpositions de canaux et
- la figure 3 illustre un protocole d'établissement des communications.

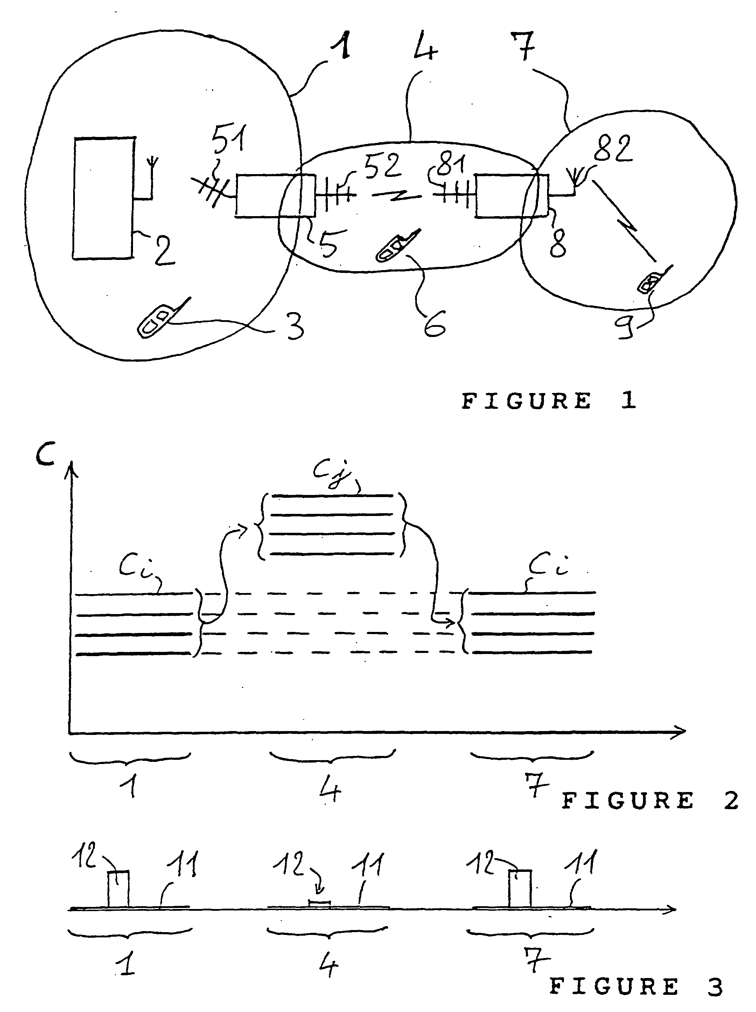

La station de base 2 de la figure 1 assure la couverture radio d'une cellule de communication radio 1 appartenant à un réseau de radiotéléphonie cellulaire, ici le réseau GSM. La couverture d'une zone d'ombre 7, non couverte par la station 2, est assurée par un répéteur de diffusion 8, satellite de la station 2. Le répéteur 8 est relié à un répéteur intermédiaire 5, de transport ou transmission, situé dans la cellule 1 et couvrant une zone intermédiaire de transmission 4. Dans cet exemple, la liaison entre les deux répéteurs 5 et 8 est une liaison radio qui emprunte même des canaux radio alloués à d'autres stations ou cellules, éloignées. Il a été représenté trois téléphones mobiles 3, 6 et 9 situés respectivement dans les zones 1, 4 et 7.

Toutes les liaisons sont bidirectionnelles mais, par souci de clarté de l'exposé, on ne décrira ci-dessous que les liaisons descendantes et leur fonctionnement, de la station 2 vers les téléphones 3, 6 et 9, cette description s'applicant aussi aux liaisons montantes.

Comme le montre la figure 2, il est ici prévu que la station de base 2 dispose d'une pluralité C de quatre canaux Ci (i : entier de 1 à 4), ou fréquences de porteuse, dans le sens descendant vers les téléphones mobiles comme 3, 6 et 9.

Le répéteur intermédiaire 5, de transmission, comporte une antenne directive, à gain, 51, pointée sur la station 2, reliée par des chaînes d'amplification de canaux à une autre antenne semblable 52 pointée sur le répéteur de diffusion 8. Ce dernier comporte une antenne directive homologue 81, pointée sur l'antenne 52 du répéteur intermédiaire 5, reliée par des chaînes d'amplification de canaux à une antenne de diffusion 82, omnidirectionnelle, couvrant la zone d'ombre 7.

Les chaînes d'amplification ci-dessus assurent, de façon classique, la transposition de fréquence voulue. Dans chaque sens de transmission se trouvent i = 4 chaînes d'amplification en parallèle Chaque chaîne comporte un oscillateur local, de réception, permettant de démoduler, dans un démodulateur - amplificateur, une porteuse reçue et un autre oscillateur local, d'émission, pour commander un amplificateur - modulateur d'émission recevant le signal démodulé.

L'établissement d'une communication entre la station 2 et le téléphone mobile 9 va maintenant être expliqué.

La communication est établie en traversant la zone intermédiaire 4 et, de la cellule de base 1 à la zone intermédiaire 4, on procède à une transposition du canal de transmission du canal du téléphone Ci en un canal intermédiaire Cj et, de la zone intermédiaire 4 à la zone d'ombre 7, on procède à une transposition de canal inverse, de Cj à Ci.

En bref, on recopie, à distance, les conditions de transmission radio, c'est-à-dire les fréquences de porteuses, existant dans la cellule 1 de rattachement.

La figure 2 illustre très schématiquement le plan de fréquences, ou canaux C, des trois zones 1, 4 et 7, disposées le long de l'axe des abscisses. La cellule 1 dispose des quatre canaux Ci, qui sont transposés en quatre autres canaux Cj au passage dans la zone 4, avant de subir une transposition inverse à leur arrivée dans la zone d'ombre 7.

Le protocole gérant l'établissement d'une communication est illustré sur la figure 3, qui représente aussi en abscisse lès références des trois zones 1, 4 et 7.

Le protocole ci-dessus comporte l'échange de messages 11 entre la station 2 et le téléphone 9 pour fournir à ce dernier l'identité du canal Ci qui lui est alloué par la station 2 pour établir une communication. Le téléphone 9 se cale alors sur le canal alloué par réglage d'un oscillateur interne.

Or, dans cet exemple, la zone intermédiaire 4 présentant une certaine surface, elle peut être considérée non comme une simple liaison de transmission mais comme une autre zone d'ombre et le téléphone 6 pourrait tenter d'établir une communication avec la base 2. Comme cela a été expliqué plus haut, une telle communication ne peut être établie, puisque le téléphone 6 se calerait sur un canal Ci et non sur le canal transposé Cj qui convient logiquement.

Une telle situation apparaîtrait à l'utilisateur du téléphone 6 comme un défaut de fiabilité du réseau. Pour l'éviter, un message 11 émis par la station 2 vers tout téléphone 3, 6 ou 9 comporte un mot de code 12, en fait un seul bit de position déterminée, autorisant ou interdisant l'accès aux canaux C. En pratique, ce bit d'accès sert à interdire, aux téléphones comme 6, l'accès aux canaux lors de la mise en service de la cellule 1, pour le réserver à des postes d'essai. En exploitation, le bit d'accès est donc normalement dans l'état d'autorisation d'accès aux postes 6, ici le niveau logique 1.

A la traversée du répéteur intermédiaire 5, le message est partiellement lu et modifié par inversion du bit d'accès, c'est-à-dire qu'en exploitation il passe à l'état logique 0 d'interdiction d'accès dans la zone intermédiaire 4 et y interdit donc toute tentative d'établissement de communication pour les postes comme 6. Au passage de la zone intermédiaire 4 à la zone d'ombre 7, le message est à nouveau partiellement lu pour réinverser le bit d'accès 12 et le rétablir dans son état logique 1 d'autorisation d'accès aux canaux dans la zone d'ombre 7.

En variante, il peut être prévu non pas d'inverser inconditionnellement le bit d'accès à la traversée du répéteur 5 mais de le forcer à l'état de blocage 0 à l'entrée dans la zone intermédiaire 4, tout en continuant à l'inverser inconditionnellement à sa sortie vers la zone d'ombre 7. Ainsi, on évite, dans le répéteur 5, une inversion, à conséquence intempestive, du bit d'accès 12 dans le cas où la station 2 émettrait un état de blocage 0 : le bit d'accès 12 est assurément à l'état de blocage 0 dans la zone 4, indépendamment de l'état émis par la station 2.

## Revendications

1. Procédé de radiotéléphonie entre une station de base (2) couvrant une cellule de communication (1) et un téléphone mobile (9) par l'intermédiaire d'un répéteur de diffusion (8) couvrant une zone d'ombre (7), le téléphone (9) étant calé sur une fréquence de canal (Ci) déterminée par la station de base (2), **caractérisé par le fait qu'**on crée une zone intermédiaire de transmission (4) entre la station de base (2) et le répéteur de diffusion (8) et, de la cellule de base (1) à la zone intermédiaire (4), on procède à une transposition du canal de transmission du canal du téléphone (Ci) à un canal intermédiaire (Cj) et, de la zone intermédiaire (4) à la zone d'ombre (7), on procède à une transposition de canal inverse (Cj à Ci).

2. Procédé selon la revendication 1, dans lequel, on associe, à la transposition de fréquence, une transposition d'un mot de code (12) d'autorisation d'accès au canal (Ci), émis par la station de base (2), en un mot de code d'interdiction d'accès et on procède à la transposition inverse de la zone intermédiaire (4) à la zone d'ombre (7).

3. Procédé selon la revendication 1, dans lequel, on associe, à la transposition de fréquence, un forçage d'un mot de code (12) d'autorisation/interdiction d'accès au canal (Ci), émis par la station (2), en mot de code d'interdiction d'accès et on le transpose en mot de code d'autorisation d'accès de la zone intermédiaire (4) à la zone d'ombre (7).

4. Procédé selon l'une des revendications 1 à 3, dans lequel on transpose le canal du téléphone (Ci) en un canal intermédiaire (Cj) alloué à une autre station.

## Patentansprüche

1. Verfahren zum Funkfernsprechen zwischen einer Basisstation (2), die eine Kommunikationszelle (1) umfasst und einem Mobiltelefon (9), über einen Sendezwischenverstärker (8), der einen Schattenbereich (7) abdeckt, wobei das Telefon (9) fest auf eine von der Basisstation (2) bestimmte Kanalfrequenz eingestellt ist, **dadurch gekennzeichnet, dass** ein Zwischenübertragungsbereich (4) zwischen der Basisstation (2) und dem Sendezwischenverstärker (8) geschaffen wird, und von der Basiszelle (1) zum Zwischenbereich (4) eine Umsetzung des Übertragungskanals des Telefonkanals (Ci) zu einem Zwischenkanal (Cj) vorgenommen wird, und vom Zwischenbereich (4) zum Schattenbereich (7) eine umgekehrte Kanalumsetzung (Cj zu Ci) vorgenommen wird.

2. Verfahren nach Anspruch 1, bei dem mit der Frequenzumsetzung eine Umsetzung eines von der Basisstation (2) ausgegebenen Codeworts (12) zur Zugriffsgewährung zum Kanal (Ci) in ein Codewort zur Zugriffsuntersagung verbunden wird, und die umgekehrte Umsetzung vom Zwischenbereich (4) zum Schattenbereich (7) vorgenommen wird.

3. Verfahren nach Anspruch 1, bei dem mit der Frequenzumsetzung eine zwangsweise Umsetzung eines von der Station (2) ausgegebenen Codeworts (12) zur Zugriffsgewährung/-untersagung zum Kanal (Ci) in ein Codewort der Zugriffsuntersagung verbunden wird, und es in ein Codewort zur Zugriffsgewährung vom Zwischenbereich (4) zum Schattenbereich (7) umgesetzt wird.

4. Verfahren nach einem der Ansprüche 1 bis 3, bei dem der Kanal des Telefons (Ci) in einen Zwischenkanal (Cj) umgesetzt wird, der einer anderen Station zugewiesen ist.

## Claims

1. Radiotelephony procedure between a base station (2) covering a communication cell (1) and a mobile telephone (9), making use of a broadcasting repeater (8) covering a shadow area (7), the telephone (9) being locked onto a channel frequency (Ci) determined by the base station (2), **characterized in that** an intermediate transmission area (4) is created between the base station (2) and the broadcasting repeater (8), the transmission channel is transposed from the telephone channel (Ci) to an intermediate channel (Cj) in the section from the base cell (1) to the intermediate area (4), and the inverse channel transposition (Cj to Ci) is carried out in the section from the intermediate area (4) to the shadow area (7).

2. Procedure according to Claim 1, in which the frequency transposition is associated with the transposition of a code word (12) authorizing access to the channel (Ci), sent by the base station (2), into a code word prohibiting access, and the inverse transposition is carried out in the section from the intermediate area (4) to the shadow area (7).

3. Procedure according to Claim 1, in which the frequency transposition is associated with the forced change of a code word (12) authorizing/prohibiting access to the channel (Ci), sent by the station (2), to a code word prohibiting access, and this word is transposed to a code word authorizing access in the section from the intermediate area (4) to the shadow area (7).

4. Procedure according to one of Claims 1 to 3, in which the telephone channel (Ci) is transposed to an intermediate channel (Cj) allocated to another station.
